# EUROPEAN PATENT APPLICATION

(11) **EP 4 410 639 A1**
(43) Date of publication of application: **07.08.2024**
(21) Application number: 22874493.4
(22) Date of filing: 23.08.2022
(51) Int. Cl.: B62D 25/20, B60K 1/04

(54) **VEHICLE BODY FLOOR ASSEMBLY FOR VEHICLE AND VEHICLE**

(30) Priority: 29.09.2021 CN 202111151169
(71) Applicant: SVOLT ENERGY TECHNOLOGY CO., LTD, Changzhou, Jiangsu 213200 (CN)
(72) Inventor: GUO, Zhiyuan, hangzhou, Jiangsu 213200 (CN); JIA, Yukun, hangzhou, Jiangsu 213200 (CN); LIM, Youngbin, hangzhou, Jiangsu 213200 (CN)
(74) Representative: dompatent von Kreisler Selting Werner - Partnerschaft von Patent- und Rechtsanwälten mbB
(86) International application number: PCT/CN2022/114119
(87) International publication number: WO 2023/051100

(57) **Abstract**

A vehicle body floor assembly for a vehicle and a vehicle. The vehicle body floor assembly includes a vehicle body mounting structure (300); a battery pack (1000) comprising a battery module (100) and a housing (200) in which the battery module (100) is provided, the housing (200) being connected to the vehicle body mounting structure (300), and at least part of the housing (200) being configured as a vehicle body floor for the vehicle.

## Description

### CROSS-REFERENCE TO RELATED APPLICATION

This application claims a priority to Chinese Patent Application No. 202111151169.3 titled "Vehicle body floor assembly for Vehicle and Vehicle", filed by SVOLT ENERGY TECHNOLOGY COMPANY LIMITED on September 29, 2021, the disclosures of which are incorporated in their entirety by reference herein.

### TECHNICAL FIELD

The present disclosure relates to the field of vehicles, in particular to a vehicle body floor assembly for a vehicle and a vehicle having the vehicle body floor assembly.

### BACKGROUND

As global petroleum resources are declining, the transformation of new energy vehicles to replace traditional fuel vehicles in the automotive industry has also accelerated. As the main energy carrier of new energy vehicles, a battery pack provides electrical energy for the entire vehicle.

In the related art, the battery pack is installed as a separate component on a vehicle body floor. There is assembly clearance between the battery pack and the vehicle body floor, which results in low integration of the battery pack and the vehicle body, and which is not conducive to the utilization of the height space of the vehicle.

### SUMMARY

The present invention aims to solve at least one of the technical problems existing in the prior art. To this end, a purpose of the present application is to propose a vehicle body floor assembly for a vehicle, in which a housing for a battery pack is configured as a vehicle body floor such that it can replace the vehicle body floor. As compared with the prior art, the vehicle does not need to have a separate vehicle body floor, which can improve the integration of the battery pack and the vehicle body, is conducive to the utilization of the height space of the vehicle and can also reduce the weight of the vehicle.

The present application further proposes a vehicle.

The vehicle body floor assembly for a vehicle according to the present disclosure includes a vehicle body mounting structure; a battery pack including a battery module and a housing in which the battery module is provided, wherein the housing is connected to the vehicle body mounting structure, and at least part of the structure of the housing is configured as a vehicle body floor for the vehicle.

According to the vehicle body floor assembly for the vehicle of the present disclosure, by configuring the housing of the battery pack as the vehicle body floor, the housing can replace the vehicle body floor. As compared with the prior art, the vehicle does not need to have a separate vehicle body floor, which can improve the integration of the battery pack and the vehicle body, is conducive to the utilization of the height space of the vehicle and can also reduce the weight of the vehicle.

In some embodiments of the present disclosure, the housing is provided with a vehicle body mounting portion, which is connected to the vehicle body mounting structure.

In some embodiments of the present disclosure, the vehicle body mounting structure includes a left sill beam, a right sill beam, and a cross beam connected between the left sill beam and the right sill beam, the vehicle body mounting portion being connected to the cross beam.

In some embodiments of the present disclosure, the housing includes an upper housing and a lower housing jointly defining an installation cavity for installing the battery module, wherein the upper housing is provided with the vehicle body mounting portion and is configured as the vehicle body floor.

In some embodiments of the present disclosure, a circumferential edge of the housing is provided with a connecting edge, which is connected to the left sill beam and/or the right sill beam; the vehicle body mounting structure further includes an end beam connected between the left and right sill beam, and the connecting edge is connected to the end beam.

In some embodiments of the present disclosure, the housing is provided with a seat installation portion for installing a seat of the vehicle.

In some embodiments of the present disclosure, the housing is provided with a high-voltage output plug-in configured to be connected to an output pole of the battery module, and with a low-voltage output plug-in configured to connect and communicate with a BMS main board of the battery pack; the high-voltage output plug-in and/or the low-voltage output plug-in are provided under a rear seat of the vehicle, and the high-voltage output plug-in and the low-voltage output plug-in are both configured to be connected to an electrical component of the vehicle.

In some embodiments of the present disclosure, the battery module is bonded to the housing.

In some embodiments of the present disclosure, the battery pack further includes a first heat exchange structure provided in the housing and located outside the battery module, and configured to exchange heat with the battery module.

In some embodiments of the present disclosure, the battery module includes a battery cell unit; a side frame provided around the battery cell unit; a first battery cell supporting structure, which is supported between the battery cell and the housing and which includes a first supporting body and a first bottom supporting rib, wherein the first supporting body is configured to support the battery cell unit and is provided with an avoidance groove penetrating the first supporting body, and the first bottom supporting rib is connected to the first supporting body and is located on a side of the first supporting body far from the battery cell unit, and the first bottom supporting rib corresponds to the avoidance groove in a thickness direction of the first supporting body.

In some embodiments of the present disclosure, the battery module further includes a BMS main board provided on the side frame.

In some embodiments of the present disclosure, the battery module includes a columnar battery cell; a second heat exchange structure, wherein the battery cell is sandwiched in the second heat exchange structure, and the second heat exchange structure is configured to exchange heat with the battery cell; a second battery cell supporting structure, which is supported between the battery cell and the housing and which includes a second supporting body and a second bottom supporting rib, wherein the second supporting body is configured to support the battery cell, and the second bottom supporting rib is connected to the second supporting body and is located on a side of the second supporting body far from the battery cell.

In some embodiments of the present disclosure, the second heat exchange structure includes multiple heat exchange plates, which are sequentially spaced apart in a length direction of the battery module to form a sandwiching space between two adjacent ones of the heat exchange plates, in which the battery cell is sandwiched;
Each of the heat exchange plates includes first and second arc-shaped portions, which are connected and both of which extend in a length direction of the heat exchange plate. In the length direction of the battery module, a direction in which the first arc-shaped portion is recessed is opposite to a direction in which the second arc-shaped portion is recessed, and the first and second arc-shaped portions of one of two adjacent ones of the heat exchange plates are arranged corresponding to the first and second arc-shaped portions of the other heat exchange plate, respectively.

In some embodiments of the present disclosure, the second heat exchange structure further includes first and second side plates, and two ends of the heat exchange plate are connected to and in communication with the first and second side plates, respectively;
The battery module further includes end plates, and two ends of the first side plate and two ends of the second side plate are connected with the end plates; and/or the end plates are connected to the second battery cell supporting structure;
The battery module further includes a BMS main board provided on the end plate, or on the first side plate, or on the second side plate.

In some embodiments of the present disclosure, the second bottom supporting rib and the second supporting body jointly define buffer spaces, which corresponds to the battery cell in a thickness direction of the second supporting body;
The second bottom supporting rib includes at least one supporting rib unit, and each of the supporting rib units and the second supporting body jointly define one of the buffer spaces;
The second bottom supporting rib includes a plurality of the supporting rib units, two adjacent ones of which are connected;
The second supporting body is provided with an avoidance hole penetrating the second supporting body, wherein the avoidance hole is provided corresponding to the buffer space, and an explosion-proof valve for the battery cell is provided corresponding to the avoidance hole;
The supporting rib unit is provided with an exhaust gap communicating with the buffer space;
The second battery cell supporting structure further includes a second upper supporting rib provided on a surface of the second supporting body close to the battery cell, the second upper supporting rib and the second supporting body jointly define an installation space for installing the battery cell, and the second upper supporting rib is adapted to be sandwiched between two adjacent ones of the battery cells.

The vehicle according to the present disclosure includes the vehicle body floor assembly for the vehicle as described above.

According to the vehicle of the present disclosure, by configuring the housing of the battery pack as the vehicle body floor, the housing can replace the vehicle body floor. As compared with the prior art, the vehicle does not need to have a separate vehicle body floor, which can improve the integration of the battery pack and the vehicle body, is conducive to the utilization of the height space of the vehicle and can also reduce the weight of the vehicle.

Some of additional aspects and advantages of the present invention will be provided in the following description, while others will become apparent from the following description, or be learned through the practice of the present invention.

### BRIEF DESCRIPTION OF THE DRAWINGS

Fig. 1 is an exploded view of a battery pack according to a first embodiment of embodiments of the present disclosure;
Fig.2 is an exploded view of battery cells, structural adhesive and a first battery cell supporting structure according to an embodiment of the present disclosure;
Fig.3 is a schematic diagram of the first battery cell supporting structure according to the embodiment of the present invention;
Fig.4 is an enlarged view of part A in Fig.3;
Fig. 5 is a schematic view from another perspective of the first battery cell supporting structure according to the embodiment of the present disclosure;
Fig.6 is an enlarged view of part B in Fig.5;
Fig.7 is an enlarged view of part C in Fig. 1;
Fig. 8 is an enlarged view of part D in Fig.1;
Fig.9 is an enlarged view of part E in Fig. 1;
Fig. 10 is an enlarged view of part F in Fig.1;
Fig. 11 is a schematic diagram of the assembly of the battery pack according to the first embodiment of the embodiments of the present disclosure, seats and a vehicle body mounting structure;
Fig. 12 is an exploded view of a battery pack, seats and a vehicle body mounting structure according to an embodiment of the present disclosure;
Fig. 13 is an exploded view of a battery pack according to a second embodiment of the embodiments of the present disclosure;
Fig. 14 is a schematic diagram of a second battery cell supporting structure according to an embodiment of the present disclosure;
Fig. 15 is a partial enlarged view of the second battery cell supporting structure in Fig. 14;
Fig. 16 is a schematic view from another perspective of the second battery cell supporting structure according to the embodiment of the present disclosure;
Fig. 17 is a partial enlarged view of the second battery cell supporting structure in Fig. 16;
Fig. 18 is an enlarged view of part G in Fig. 13.

### DETAILED DESCRIPTION

The embodiments of the present disclosure are described in detail below. Examples of the embodiments are shown in the accompanying drawings, in which the same or similar reference numerals indicate the same or similar elements or elements having the same or similar functions. The embodiments described below with reference to the drawings are exemplary, and are only intended to explain the present invention, and should not be construed as limiting the present invention.

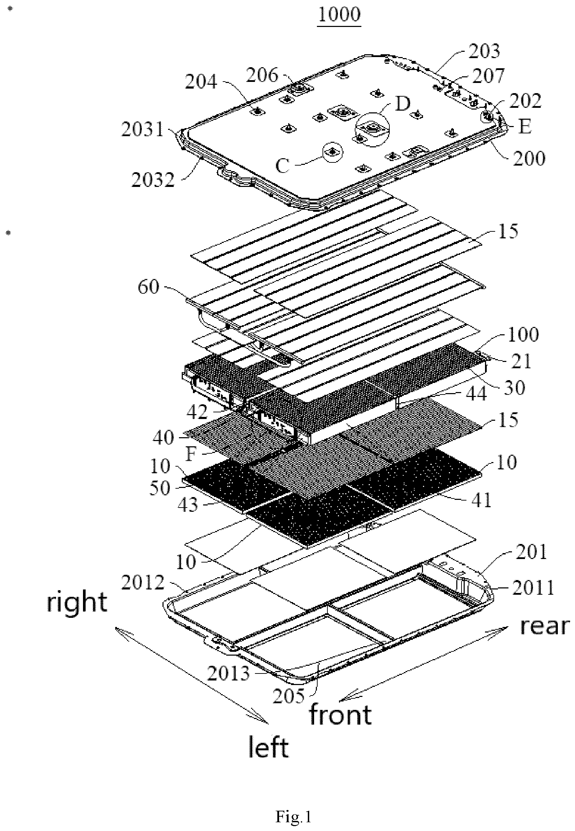

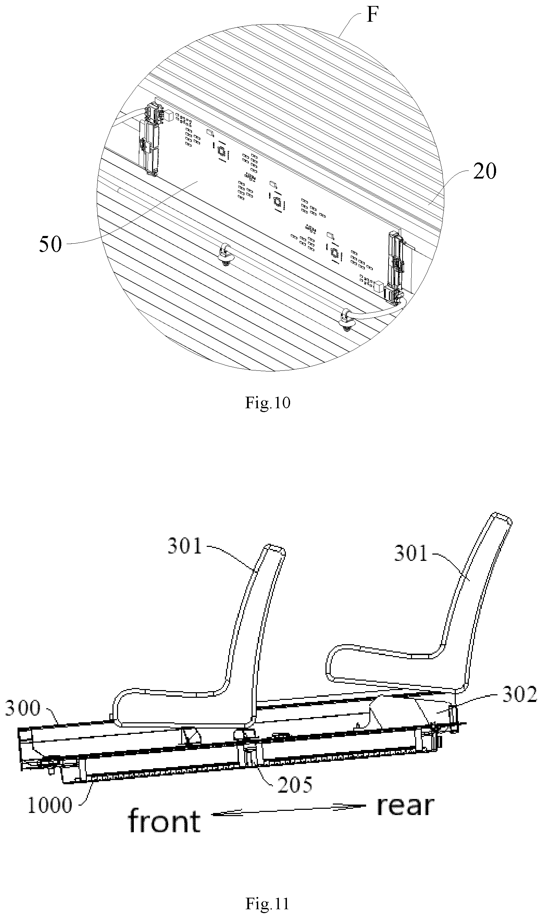

A vehicle body floor assembly for a vehicle according to an embodiment of the present disclosure will be described below with reference to Figs. 1-18.

As shown in Figs. 1 to 18, the vehicle body floor assembly according to the embodiment of the present disclosure includes a vehicle body mounting structure 300 and a battery pack 1000. The battery pack 1000 includes a battery module 100 and a housing 200 in which the battery module 100 is provided. The housing 200 is connected to the vehicle body mounting structure 300, and at least part of the structure of the housing 200 is configured as a vehicle body floor for the vehicle. Further, part of the structure of the housing 200 is configured as the vehicle body floor for the vehicle.

The vehicle body mounting structure 300 may be a chassis structure of the vehicle, and may include sill beams and other structures. By connecting the housing 200 to the vehicle body mounting structure 300, the battery pack 1000 can be mounted on the vehicle body mounting structure 300. Moreover, by configuring the housing 200 as the vehicle body floor, the arrangement of a vehicle body floor can be omitted. That is, the vehicle does not need to have a separate vehicle body floor, which can reduce the weight of the vehicle. At the same time, it can improve the integration of the battery pack and the vehicle body, and is conducive to the utilization of the height space of the vehicle.

Therefore, by configuring the housing 200 as the vehicle body floor, the housing 200 can replace the vehicle body floor. As compared with the prior art, the vehicle does not need to have a separate vehicle body floor, which can improve the integration of the battery pack 1000 and the vehicle body, is conducive to the utilization of the height space of the vehicle, and can also reduce the weight of the vehicle.

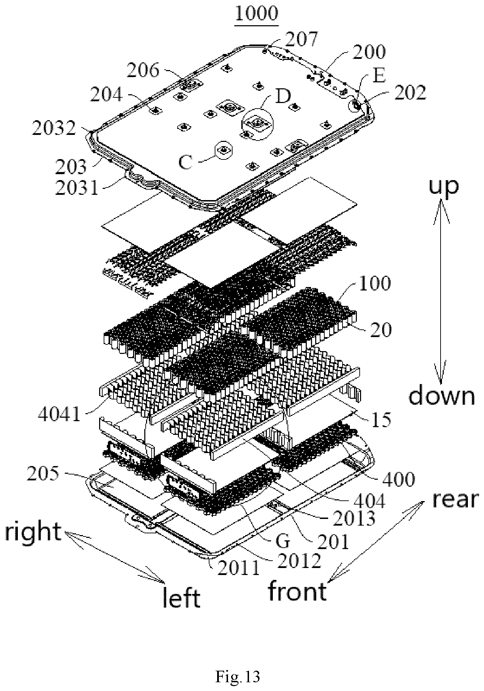

In some embodiments of the present disclosure, as shown in Figs. 1 and 13, the housing 200 is provided with a vehicle body mounting portion 204, which is connected to the vehicle body mounting structure 300. By providing the vehicle body mounting portion 204, it is convenient to install the housing 200 in the vehicle body mounting structure 300, which can improve the installation efficiency of the battery pack 1000.

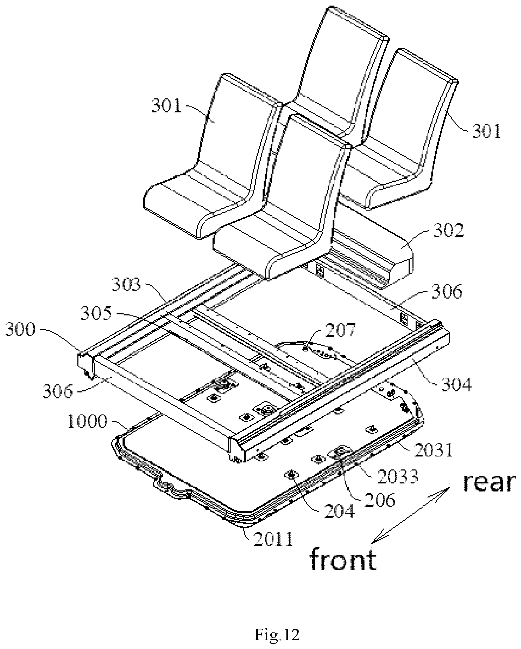

In some embodiments of the present disclosure, as shown in Fig. 12, the vehicle body mounting structure 300 includes a left sill beam 303, a right sill beam 304, and a cross beam 305 connected between the left sill beam 303 and the right sill beam 304. One end of the cross beam 305 is welded to the left sill beam 303, and the other end of the cross beam 305 is welded to the right sill beam 304, and the vehicle body mounting portion 204 is connected to the cross beam 305. Further, the vehicle body mounting portion 204 is bolted to the cross beam 305. In this way, it is possible to reliably install the battery pack 1000 on the vehicle body mounting structure 300 and also removably install the battery pack 1000 on the vehicle body mounting structure 300.

In some embodiments of the present disclosure, as shown in Figs. 1 and 13, the housing 200 includes an upper housing 203 and a lower housing 201 jointly defining an installation cavity 205 for installing the battery module 100, wherein the upper housing 203 is provided with the vehicle body mounting portion 204, and is configured as the vehicle body floor.

In some embodiments of the present disclosure, as shown in Figs. 1 and 13, a circumferential edge of the housing 200 is provided with a connecting edge, which is connected to the left sill beam 303 and/or the right sill beam 304. Further, the vehicle body mounting structure 300 further includes an end beam 306, which is connected between the left sill beam 303 and the right sill beam 304 and which is welded to both the left sill beam 303 and the right sill beam 304, and the connecting edge is connected to the end beam 306. In this way, the battery pack 1000 can be more reliably mounted on the vehicle body mounting structure 300.

In some embodiments of the present disclosure, as shown in Figs. 1 and 13, the housing 200 is provided with a seat installation portion 206 for installing a seat 301 of the vehicle. Further, in a height direction of the vehicle, the seat installation portion 206 can be provided corresponding to a front seat 301 of the vehicle, and can be used to install the front seat 301 of the vehicle. In this way, it is possible to achieve the purpose of installing the seat 301 with the battery pack 1000 and also allow the seat 301 to be reliably installed on the housing 200 of the battery pack 1000.

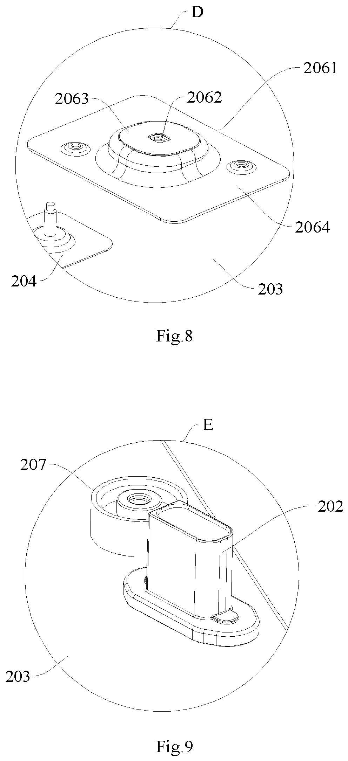

In some embodiments of the present disclosure, as shown in Figs. 1 and 9, the housing 200 is provided with a high-voltage output plug-in 207 configured to be connected to an output pole 21 of the battery module 100, and with a low-voltage output plug-in 202 configured to connect and communicate with a BMS main board 50 of the battery pack 1000. In this way, the battery pack 1000 can output high-voltage power through the high-voltage output plug-in 207, and the BMS main board 50 can also communicate with the outside through the low-voltage output plug-in 202.

Further, as shown in Fig. 12, the high-voltage output plug-in 207 and/or the low-voltage output plug-in 202 are provided under a rear seat 301 of the vehicle. Preferably, the high-voltage output plug-in 207 and the low-voltage output plug-in 202 are both provided under the rear seat 301 of the vehicle. By providing an electrical component 302 between the rear seat 301 of the vehicle and the battery pack 1000, the maintenance of the electrical component 302 can be facilitated. Moreover, the high-voltage output plug-in 207 and the low-voltage output plug-in 202 are both configured to be connected to the electrical component 302 of the vehicle. It should be noted that the electrical component 302 is provided outside the battery pack 1000, and may include a power distribution unit for the vehicle and a power distribution box and other structural parts of the battery pack 1000. The high-voltage output plug-in 207 can be connected to the power distribution unit, and the low-voltage output plug-in 202 can be connected to the power distribution box. By providing the power distribution box outside the battery pack 1000, an internal space of the battery pack 1000 can be saved, and this can increase the energy density of the battery pack 1000.

In some embodiments of the present disclosure, as shown in Figs. 1 and 13, the battery module 100 is bonded to the housing 200. Further, the battery module 100 is bonded to an inner surface of the housing 200 via structural adhesive 15.

As shown in Figs 1 to 12, the battery pack 1000 according to a first embodiment of the present disclosure includes a housing 200, a battery module 100 provided in the housing 200, and a first heat exchange structure 60 provided in the housing 200 and located outside the battery module 100 and configured to exchange heat with the battery module 100. Further, the first heat exchange structure 60 may be provided as a heat exchange plate that exchanges heat with the battery module 100 to keep the battery pack 1000 at a suitable operating temperature.

As shown in Figs. 1 to 12, the housing 200 includes an upper housing 203 and a lower housing 201. The upper housing 203 is connected to the lower housing 201, and they jointly define an installation cavity 205 for installing the battery module 100 of the battery pack 1000. The battery module 100 is installed in the installation cavity 205. The housing 200 is provided with a vehicle body mounting portion 204, and in particular, the upper housing 203 is provided with the vehicle body mounting portion 204 configured to be connected to the vehicle body mounting structure 300 of the vehicle. The housing 200 is configured as the vehicle body floor of the vehicle, and in particular, the upper housing 203 is configured as the vehicle body floor of the vehicle.

It should be noted that the vehicle body mounting structure 300 may be the chassis structure of the vehicle, the vehicle body mounting structure 300 may include sill beams and other structures, and the vehicle body mounting portion 204 may be provided as a bolt and may be connected to the vehicle body mounting structure 300 through the bolt, but the present invention is not limited thereto. The vehicle body mounting portion 204 may be connected in a snap fit manner or welded to the vehicle body mounting structure 300. By connecting the vehicle body mounting portion 204 to the vehicle body mounting structure 300, the battery pack 1000 can be mounted on the vehicle body mounting structure 300. Moreover, by configuring the upper housing 203 as the vehicle body floor, the arrangement of a vehicle body floor can be omitted. That is, the vehicle does not need to have a separate vehicle body floor, which can reduce the weight of the vehicle. At the same time, it can improve the integration of the battery pack and the vehicle body, and is conducive to the utilization of the height space of the vehicle.

Therefore, by configuring the upper housing 203 as the vehicle body floor, the upper housing 203 can replace the vehicle body floor. As compared with the prior art, the vehicle does not need to have a separate vehicle body floor, which can improve the integration of the battery pack 1000 and the vehicle body, is conducive to the utilization of the height space of the vehicle, and can also reduce the weight of the vehicle.

In some embodiments of the present disclosure, the vehicle body mounting portion 204 is bolted to the vehicle body mounting structure 300, wherein there may be a plurality of the vehicle body mounting portions 204, all of which may be provided as bolts. The bolts may be integrally formed with the upper housing 203. By the threaded connection between the bolts and the vehicle body mounting structure 300, the battery pack 1000 can be reliably assembled on the vehicle body mounting structure 300, which prevents the battery pack 1000 from falling off the vehicle body mounting structure 300. Furthermore, by bolting the vehicle body mounting portion 204 to the vehicle body mounting structure 300, it is convenient to remove the battery pack 1000 from the vehicle body mounting structure 300 and install the battery pack 1000 on the vehicle body mounting structure 300.

In some embodiments of the present disclosure, as shown in Figs. 1 and 8, the upper housing 203 is provided with a seat installation portion 206 for installing a seat 301 of the vehicle. Further, in the height direction of the vehicle, the seat installation portion 206 can be provided corresponding to a front seat 301 of the vehicle, and can be used to install the front seat 301 of the vehicle. In this way, it is possible to achieve the purpose of installing the seat 301 using the battery pack 1000 and also allow the seat 301 to be reliably installed on the housing 200 of the battery pack 1000.

In some embodiments of the present disclosure, as shown in Fig. 8, the seat installation portion 206 may include a seat mounting bracket 2061, inside which a nut 2062 is provided to be connected to the seat 301. The seat mounting bracket 2061 is mounted on the upper housing 203, and the seat 301 may be provided with a bolt, so that the seat 301 can be reliably mounted on the seat installation portion 206 by connecting the bolt and the nut 2062. However, the present invention is not limited to this, and the seat installation portion 206 and the seat 301 may be connected in another way. For example, the seat installation portion 206 and the seat 301 are connected in a snap fit manner, or they may be welded together.

In some embodiments of the present disclosure, as shown in Fig. 8, the seat mounting bracket 2061 may include a mounting body 2063 and a mounting flange 2064 connected to the upper housing 203, wherein the nut 2062 is provided on the mounting body 2063, and the mounting body 2063 is spaced apart from the upper housing 203. By configuring the mounting body 2063 to be spaced apart from the upper housing 203, an avoidance space can be formed between the mounting body 2063 and the upper housing 203. When the nut 2062 is connected to the bolt, the avoidance space can avoid the bolt, thereby making it possible to ensure reliable installation of the seat 301 on the housing 200. In addition, an area of contact between the seat mounting bracket 2061 and the upper housing 203 can be increased, and the seat mounting bracket 2061 can be stably installed on the upper housing 203, through connecting the plate-like mounting flange 2064 to the upper housing 203.

In some embodiments of the present disclosure, as shown in Figs. 1 and 9, the upper housing 203 is provided with a high-voltage output plug-in 207 configured to be connected to an output pole 21 of the battery module 100, and with a low-voltage output plug-in 202 configured to connect and communicate with a BMS main board 50 of the battery pack 1000. In this way, the battery pack 1000 can output high-voltage power through the high-voltage output plug-in 207, and the BMS main board 50 can also communicate with the outside through the low-voltage output plug-in 202.

Further, as shown in Fig. 12, the high-voltage output plug-in 207 and/or the low-voltage output plug-in 202 are provided under the rear seat 301 of the vehicle. Preferably, the high-voltage output plug-in 207 and the low-voltage output plug-in 202 are both provided under the rear seat 301 of the vehicle. By providing an electrical component 302 between the rear seat 301 of the vehicle and the battery pack 1000, the repair of the electrical component 302 can be facilitated. Moreover, the high-voltage output plug-in 207 and the low-voltage output plug-in 202 are both configured to be connected to the electrical component 302 of the vehicle. It should be noted that the electrical component 302 is provided outside the battery pack 1000, and may include a power distribution unit for the vehicle and a power distribution box and other structural parts of the battery pack 1000. The high-voltage output plug-in 207 can be connected to the power distribution unit, and the low-voltage output plug-in 202 can be connected to the power distribution box. By providing the power distribution box outside the battery pack 1000, an internal space of the battery pack 1000 can be saved, and this can increase the energy density of the battery pack 1000.

In some embodiments of the present disclosure, as shown in Figs. 1 and 12, a circumferential edge of the upper housing 203 is provided with an upper connecting edge 2031, and a circumferential edge of the lower housing 201 is provided with a lower connecting edge 2011. The upper and lower connecting edges 2031, 2011 are connected in a sealed manner. In this way, it is possible to improve the sealing performance of the installation cavity 205 and prevent dust and other debris from entering the installation cavity 205.

Further, as shown in Figs. 1 and 12, the upper connecting edge 2031 is provided with an upper connecting hole 2032, and the lower connecting edge 2011 is provided with a lower connecting hole 2012 corresponding to the upper connecting hole 2032. A fastener (such as a bolt) passes through the upper connecting hole 2032 and the lower connecting hole 2012 simultaneously and is used to be connected to the vehicle body mounting structure 300. The fastener can pass through the lower connecting edge 2011 and the upper connecting hole 2032 in sequence before being connected to the vehicle body mounting structure 300. In this way, it is possible to firmly install the battery pack 1000 on the vehicle body mounting structure 300 and prevent the battery pack 1000 from falling off.

In some embodiments of the present disclosure, the housing 200 may be provided with a repair hole provided corresponding to the BMS main board 50, and with a repair cover configured to open or close the repair hole, making it easy to repair the BMS main board 50.

In some embodiments of the present disclosure, as shown in Fig. 12, the upper housing 203 is provided with a gasket 2033 provided corresponding to the upper connecting hole 2032 and configured for position limitation.

In some embodiments of the present disclosure, the battery module 100 is bonded to the housing 200. Further, the battery module 100 may be bonded to the lower housing 201 via structural adhesive 15, thereby fixing the battery module 100 inside the housing 200.

In some embodiments of the present disclosure, a first heat exchange structure 60 is provided between the battery module 100 and the housing 200, and is bonded to both the battery module 100 and the housing 200. Further, the bonding between the first heat exchange structure 60 and the battery module 100, as well as the bonding between the first heat exchange structure 60 and the housing 200 can be carried out through structural adhesive 15. The first heat exchange structure 60 can be provided on the upper housing 203 and the battery module 100, thereby firmly installing the first heat exchange structure 60 and the battery module 100 inside the housing 200.

In some embodiments of the present disclosure, as shown in FIG. 1, the lower housing 201 is provided with a lower housing cross beam 2013, which is configured to improve the modality and rigidity of the battery pack 1000. Further, the lower housing cross beam 2013 can be connected to a bottom wall and side walls of the lower housing 201, so that the structural strength of the lower housing 201 can be improved.

As shown in Fig. 1, the battery pack 1000 according to the embodiment of the present disclosure includes the housing 200 of the above-mentioned embodiment. By configuring the upper housing 203 as the vehicle body floor, the upper housing 203 can replace the vehicle body floor. As compared with the prior art, the vehicle does not need to have a separate vehicle body floor, which can improve the integration of the battery pack 1000 and the vehicle body, is conducive to the utilization of the height space of the vehicle, and can also reduce the weight of the vehicle.

The battery module 100 according to an embodiment of the present disclosure will be described below with reference to Figs. 1 to 6.

As shown in Figs. 1 to 6, the battery module 100 according to the embodiment of the present disclosure includes a battery cell unit 30, a side frame 40 and a first battery cell supporting structure 10. The side frame 40 is provided around the battery cell unit 30, and further, the side frame 40 is configured as a closed-loop structure, is provided around side surfaces of the battery cell unit 30, and can be bonded to the battery cell unit 30.

As shown in Figs. 1 to 6, the first battery cell supporting structure 10 is supported between the battery cell 20 and the housing 200, and includes a first supporting body 11 and a first bottom supporting rib 12. The first supporting body 11 is configured to support the battery cell unit 30. Further, the battery cell unit 30 is provided on an upper surface of the first supporting body 11, and the first supporting body 11 is provided with an avoidance groove 111 penetrating the first supporting body 11. Further, the avoidance groove 111 penetrates the first supporting body 11 in a thickness direction of the first supporting body 11. The first bottom supporting rib 12 is connected to the first supporting body 11 and is located on a side of the first supporting body 11 far from the battery cell unit 30. For example, the battery cell unit 30 is provided on the upper surface of the first supporting body 11, and the first bottom supporting rib 12 is arranged below the first supporting body 11. The first bottom supporting rib 12 and the avoidance groove 111 are provided corresponding to each other in the thickness direction of the first supporting body 11. Preferably, the first bottom supporting rib 12 is provided facing the avoidance groove 111 in the thickness direction of the first supporting body 11.

The battery module 100 is provided with a first battery cell supporting structure 10. In this case, the first battery cell supporting structure 10 belongs to the structure of the battery module 100, but the present invention is not limited to this. The first battery cell supporting structure 10 may be provided as a separate part. Preferably, the first battery cell supporting structure 10 belongs to the structure of the battery module 100. When the first battery cell supporting structure 10 supports the unit 30, there is clearance between the first bottom supporting rib 12 and the battery cell unit 30, that is, the battery cell unit 30 is spaced apart from the first bottom supporting rib 12. When the bottom of the first battery cell supporting structure 10 is subjected to an impact, the first battery cell supporting structure 10 plays a buffering role and can absorb the impact force. As a result, the impact force received by the battery cell unit 30 can be reduced, making it possible to improve the safety of using the battery module 100, and also extend the service life of the battery module 100.

Further, the battery module 100 can be installed inside the housing 200 of the battery pack 1000. Of course, the battery module 100 can be installed on other parts. This invention is described by taking a case where the battery module 100 is installed inside the housing 200 of the battery pack 1000 as an example. The battery module 100 is installed inside the housing 200 of the battery pack 1000, and the first battery cell supporting structure 10 is supported below the battery cell unit 30. Further, the first battery cell supporting structure 10 is supported between the battery cell unit 30 and the housing 200 (the lower housing 201). When the bottom of the housing 200 (the lower housing 201) of the battery pack 1000 is subjected to an impact, since there is clearance between the first bottom supporting rib 12 and the battery cell unit 30, the impact force will not be directly transmitted to the battery cell unit 30 through the first bottom supporting rib 12, and the first battery cell supporting structure 10 can absorb the impact force. Since the first battery cell supporting structure 10 can deform and absorb energy, the impact force received by the battery cell unit 30 can be reduced, making it possible to improve the safety of using the battery module 100 and the battery pack 1000, and also extend the service life of the battery module 100 and the battery pack 1000.

Therefore, through providing the first bottom supporting rib 12 corresponding to the avoidance groove 111, the first battery cell supporting structure 10 is installed inside the housing 200 of the battery pack 1000 to support the battery cell unit 30. When the bottom of the housing 200 of the battery pack 1000 is subjected to an impact, the first battery cell supporting structure 10 plays a buffering role and can absorb the impact force. As a result, the impact force received by the battery cell unit 30 can be reduced, making it possible to improve the safety of using the battery module 100 and the battery pack 1000, and also extend the service life of the battery module 100 and the battery pack 1000.

In some embodiments of the present disclosure, as shown in Fig. 1, the housing 200 includes a lower housing 201 and an upper housing 203, which are connected in a sealed manner, and between which the battery module 100 is installed.

In some embodiments of the present disclosure, as shown in Fig. 1, the battery pack 1000 may further include a BMS (BATTERY MANAGEMENT SYSTEM) main board 50, which is connected to the low-voltage output plug-in 202 of the battery pack 1000 through a wire harness. The BMS main board 50 is provided on the side frame 40, and further, the BMS main board 50 may be bonded and mounted on the side frame 40, or be mounted on the side frame 40 through a bolt, or be connected to the side frame 40 in a snap fit manner. By providing the BMS main board 50 on the side frame 40, the BMS main board 50 can be integrated on the battery module 100. As a result, the battery module 100 and the BMS main board 50 have a compact overall structure. After the battery module 100 is installed in the housing 200, a situation in which the BMS main board 50 occupies space in another position of the battery pack 1000 can be avoided, and the space utilization rate in the battery pack 1000 can thus be improved.

In some embodiments of the present disclosure, as shown in Fig. 1, the side frame 40 may include a left side frame 41, a right side frame 42, a front side frame 43 and a rear side frame 44, all of which can be constructed as plate-like structures, and which are connected end to end in sequence. The left side frame 41 is located on a left side of the battery cell unit 30, the right side frame 42 is located on a right side of the battery cell unit 30, the front side frame 43 is located on a front side of the battery cell unit 30, and the rear side frame 44 is located on a back side of the battery cell unit 30. The BMS main board 50 can be mounted on the front side frame 43. In this way, it is possible to make the structure of the side frame 40 simple and make it easy to assemble the side frame 40 and the battery cell unit 30 together.

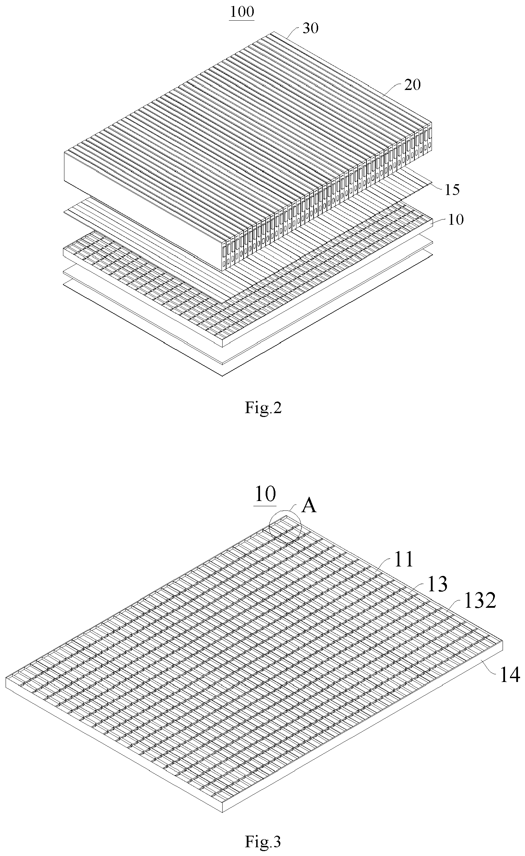

In some embodiments of the present disclosure, as shown in Figs. 1 and 2, the battery cell unit 30 may be bonded to the first battery cell supporting structure 10. Further, the battery cell unit 30 may be bonded to the first supporting body 11 of the first battery cell supporting structure 10 via structural adhesive 15. In this way, the battery cell 30 can be reliably installed on the first battery cell supporting structure 10, preventing the battery cell unit 30 from moving.

In some embodiments of the present disclosure, as shown in Figs. 1 and 2, the battery cell unit 30 may include a plurality of battery cells 20, which may be sequentially arranged in a thickness direction of the battery cell 20, and which extend in the same direction. In this way, it is possible to allow the plurality of battery cells 20 to be arranged on the first battery cell supporting structure 10 in a regular manner, making it possible to install more battery cells 20 on the first battery cell supporting structure 10.

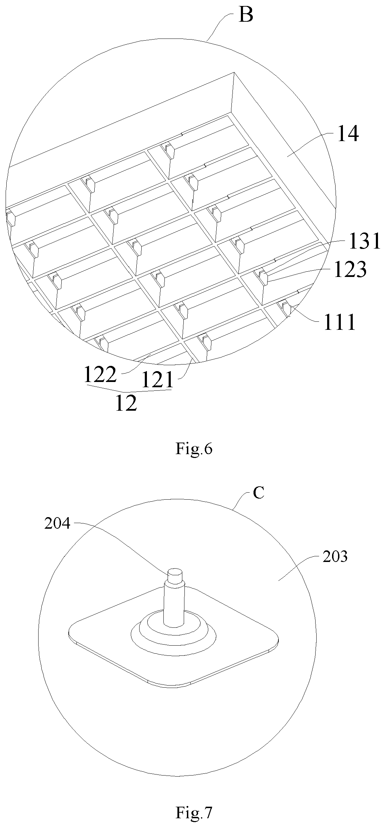

In some embodiments of the present disclosure, as shown in Fig. 6, in the thickness direction of the first supporting body 11, the first bottom supporting rib 12 is spaced apart from the avoidance groove 111. In this way, it is possible to provide sufficient clearance between the first bottom supporting rib 12 and the battery cell 20 when the first battery support structure 10 supports the battery cell 20. When the first bottom supporting rib 12 of the first battery cell supporting structure 10 is subjected to an impact, the transmission of the impact force by the first bottom supporting rib 12 to the battery cell 20 can be effectively avoided, making it possible to further reduce the impact force received by the battery cell 20. As a result, the safety of using the battery module 100 and the battery pack 1000 can be further improved, and the service life of the battery module 100 and the battery pack 1000 can also be extended.

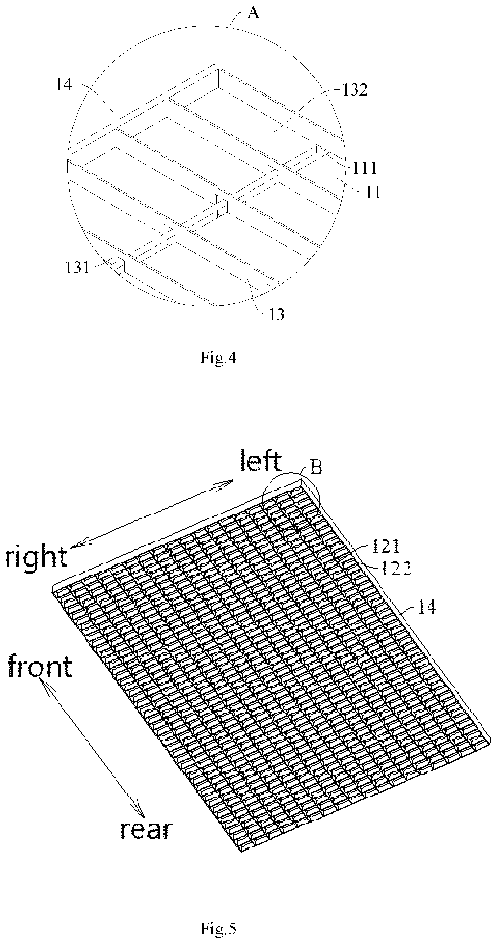

In some embodiments of the present disclosure, as shown in Fig. 6, the first bottom supporting rib 12 may include a first lower supporting rib 121, which extends in the same direction as the avoidance groove 111, and which corresponds to the avoidance groove 111 in the thickness direction of the first supporting body 11 and is spaced apart from the avoidance groove 111. Further, the first battery cell supporting structure 10 may further include a side panel 14, which is sleeved on the circumferential edge of the first supporting body 11. Further, the circumferential edge of the first supporting body 11 is connected to a middle position of the side panel 14. The side panel 14 can be integrally formed with the first supporting body 11, and at least one end of the first lower supporting rib 121 is connected to the side panel 14. The first lower supporting rib 121 and the avoidance groove 111 may both extend in the length direction of the first battery cell supporting structure 10. Of course, the first lower supporting rib 121 and the avoidance groove 111 may both extend in a width direction of the first battery cell supporting structure 10. Preferably, the first lower supporting rib 121 and the avoidance groove 111 both extend in the length direction of the first battery cell supporting structure 10. The length direction of the first battery cell supporting structure 10 refers to a front-rear direction in Fig. 5. The extension direction of the first lower supporting rib 121 is perpendicular to the extension direction of the battery cell 20. In this way, it is possible to ensure that the first lower supporting rib 121 is provided facing the avoidance groove 111 and prevent the impact force from being transmitted to the battery cell 20 through the first lower supporting rib 121.

In some embodiments of the present disclosure, as shown in Fig. 6, the first bottom supporting rib 12 may further include a second lower supporting rib 122, which is provided on a surface of the first supporting body 11 far from the battery cell unit 30, and which is arranged to cross the first lower supporting rib 121, wherein at least one end of the second lower supporting rib 122 is connected to the side panel 14, and the second lower supporting rib 122 may be integrally formed with the first supporting body 11. Through configuring the second lower supporting rib 122 and the first lower supporting rib 121 crossing each other, the second lower supporting rib 122 can support the first lower supporting rib 121, and can improve the structural strength of the second lower supporting rib 122. Therefore, the deformation and energy absorption capacity of the second lower supporting rib 122 can be improved, and the impact force received by the battery cell 20 can be further reduced.

In some embodiments of the present disclosure, as shown in Fig. 6, the first lower supporting rib 121 and the second lower supporting rib 122 are provided perpendicular to each other. For example, the first lower supporting rib 121 is provided to extend in the length direction of the first battery cell supporting structure 10, and the second lower supporting rib 122 is provided to extend in the width direction of the first battery cell supporting structure 10. The length direction of the first battery cell supporting structure 10 refers to a front-rear direction in Fig. 5, and the width direction of the first battery cell supporting structure 10 refers to a left-right direction in Fig.5. The second lower supporting rib 122 extends in the same direction as the battery cell 20. Further, the first lower supporting rib 121 and the second lower supporting rib 122 are both configured as plate-like structures, and are integrally formed. In this way, the second lower supporting rib 122 can better support the first lower supporting rib 121, which can further improve the deformation and energy absorption capacity of the second lower supporting rib 122, which, in turn, can further reduce the impact force received by the battery cell 20.

In some embodiments of the present disclosure, as shown in Fig.6, the second lower supporting rib 122 is provided with a first avoidance gap 123 communicating with the avoidance groove 111. In the thickness direction of the first supporting body 11, the first avoidance gap 123 is provided corresponding to the avoidance groove 111 and the first lower supporting rib 121. Preferably, the first avoidance gap 123 is provided facing the avoidance groove 111 and the first lower supporting rib 121. An end of the second lower supporting rib 122 close to the first supporting body 11 is provided with the first avoidance gap 123. In this way, it is possible to ensure that there is sufficient clearance between the first lower supporting rib 121 and the battery cell 20, which can increase the energy absorption effect of the first battery cell supporting structure 10, thereby making it possible to further prevent the impact force from acting on the battery cell 20.

In some embodiments of the present disclosure, as shown in Figs. 3 and 4, the first battery cell supporting structure 10 may further include a first upper supporting rib 13, which is provided on a surface of the first supporting body 11 close to the battery cell unit 30, which is provided on a surface of the first supporting body 11 close to the battery cell unit 30, and which is provided between two adjacent ones of the battery cells 20. Further, the first upper supporting rib 13 is adapted to be sandwiched between two adjacent ones of the battery cells 20 of the battery module 100. At least one end of the first upper supporting rib 13 is connected to the side panel 14, and the first upper supporting rib 13 extends in the same direction as the battery cell 20. The battery module 100 may include a plurality of the battery cells 20, each of which may be arranged in a rectangular shape and which may be arranged in sequence in the length direction of the first battery cell supporting structure 10. There may be a plurality of the first upper supporting ribs 13 spaced apart in sequence in the arrangement direction of the battery cells 20, that is, the plurality of first upper supporting ribs 13 are spaced apart in sequence in the length direction of the first battery cell supporting structure 10, thereby separating the first battery cell supporting structure 10 into a plurality of battery cell placement slots 132, which are in communication with the avoidance groove 111. In each battery cell placement slot 132, one battery cell 20 is installed, and one of the first upper supporting ribs 13 may be provided between two adjacent battery cells 20. In this way, the first battery cell supporting structure 10 can limit the battery cell 20, making it possible to firmly install the battery cell 20 on the first battery cell supporting structure 10, thereby preventing the position of the battery cell 20 from moving.

Further, the first upper supporting rib 13 may be configured as a plate-like structure, and the thickness of each of the first upper supporting ribs 13 is smaller than the clearance between two adjacent battery cells 20, and a spacing distance between two adjacent ones of the first upper supporting ribs 13 is greater than the thickness of the battery cell 20. In this way, it is possible to ensure that the battery cell 20 can be installed in the battery cell placement slot 132.

In some embodiments of the present disclosure, as shown in Fig.6, the first upper supporting rib 13 is arranged opposite to the second lower supporting rib 122 in the thickness direction of the first supporting body 11. Preferably, the first upper supporting rib 13 is provided facing the second lower supporting rib 122 in the thickness direction of the first supporting body 11, and is provided with a second avoidance gap 131 arranged corresponding to the avoidance groove 111, wherein an end of the first upper supporting rib 13 facing the first supporting body 11 is provided with the second avoidance gap 131 arranged facing the avoidance groove 111. In this way, an area of contact between the first upper supporting rib 13 and the battery cell 20 can be reduced, and the transmission of force from the first upper supporting rib 13 to the battery cell 20 can be reduced. As a result, the force received by the battery cell 20 can be reduced, making it possible to extend the service life of the battery cell 20, and thus to improve the energy absorption capacity of the first battery cell supporting structure 10.

As shown in Figs. 7-9 and 13-18, the battery pack 1000 according to a second embodiment of the present disclosure includes a housing 200 and a battery module 100 provided in the housing 200.

As shown in Figs. 7-9 and 13-18, the housing 200 includes an upper housing 203 and a lower housing 201. The upper housing 203 is connected to the lower housing 201, and they jointly define an installation cavity 205 for installing the battery module 100 of the battery pack 1000. The battery module 100 is installed in the installation cavity 205. The housing 200 is provided with a vehicle body mounting portion 204, and in particular, the upper housing 203 is provided with the vehicle body mounting portion 204 configured to be connected to the vehicle body mounting structure 300. The housing 200 is configured as the vehicle body floor of the vehicle, and in particular, the upper housing 203 is configured as the vehicle body floor of the vehicle.

It should be noted that the vehicle body mounting structure 300 may be the chassis structure of the vehicle, the vehicle body mounting structure 300 may include sill beams and other structures, and the vehicle body mounting portion 204 may be provided as a bolt and may be connected to the vehicle body mounting structure 300 through the bolt, but the present invention is not limited to thereto. The vehicle body mounting portion 204 may be connected in a snap fit manner or welded to the vehicle body mounting structure 300. By connecting the vehicle body mounting portion 204 to the vehicle body mounting structure 300, the battery pack 1000 can be mounted on the vehicle body mounting structure 300. Moreover, by configuring the upper housing 203 as the vehicle body floor, the arrangement of a vehicle body floor can be omitted. That is, the vehicle does not need to have a separate vehicle body floor, which can reduce the weight of the vehicle. At the same time, it can improve the integration of the battery pack and the vehicle body, and is conducive to the utilization of the height space of the vehicle.

Thus, by configuring the housing 200 as the vehicle body floor, the housing 200 can replace the vehicle body floor. As compared with the prior art, the vehicle does not need to have a separate vehicle body floor, which can improve the integration of the battery pack 1000 and the vehicle body, is conducive to the utilization of the height space of the vehicle, and can also reduce the weight of the vehicle.

In some embodiments of the present disclosure, the vehicle body mounting portion 204 is bolted to the vehicle body mounting structure 300, wherein there may be a plurality of the vehicle body mounting portions 204, all of which may be provided as bolts. The bolts may be integrally formed with the upper housing 203. By the threaded connection between the bolts and the vehicle body mounting structure 300, the battery pack 1000 can be reliably assembled on the vehicle body mounting structure 300, which prevents the battery pack 1000 from falling off the vehicle body mounting structure 300. Furthermore, by bolting the vehicle body mounting portion 204 to the vehicle body mounting structure 300, it is convenient to remove the battery pack 1000 from the vehicle body mounting structure 300 and install the battery pack 1000 on the vehicle body mounting structure 300.

In some embodiments of the present disclosure, as shown in Figs. 13, 8, 11 and 12, the upper housing 203 is provided with a seat installation portion 206 for installing a seat 301 of the vehicle. Further, in the height direction of the vehicle, the seat installation portion 206 can be provided corresponding to a front seat 301 of the vehicle, and can be used to install the front seat 301 of the vehicle. In this way, it is possible to achieve the purpose of installing the seat 301 using the battery pack 1000 and also allow the seat 301 to be reliably installed on the housing 200 of the battery pack 1000.

In some embodiments of the present disclosure, as shown in Fig. 8, the seat installation portion 206 may include a seat mounting bracket 2061, inside which a nut 2062 is provided to be connected to the seat 301. The seat mounting bracket 2061 is mounted on the upper housing 203, and the seat 301 may be provided with a bolt, so that the seat 301 can be reliably mounted on the seat installation portion 206 by connecting the bolt and the nut 2062. However, the present invention is not limited to this, and the seat installation portion 206 and the seat 301 may be connected in another way. For example, the seat installation portion 206 and the seat 301 are connected in a snap fit manner, or they may be welded together.

In some embodiments of the present disclosure, as shown in Fig. 8, the seat mounting bracket 2061 may include a mounting body 2063 and a mounting flange 2064 connected to the upper housing 203, wherein the nut 2062 is provided on the mounting body 2063, and the mounting body 2063 is spaced apart from the upper housing 203. By configuring the mounting body 2063 to be spaced apart from the upper housing 203, an avoidance space can be formed between the mounting body 2063 and the upper housing 203. When the nut 2062 is connected to the bolt, the avoidance space can avoid the bolt, thereby making it possible to ensure reliable installation of the seat 301 on the housing 200. In addition, by connecting the plate-like mounting flange 2064 to the upper housing 203, an area of contact between the seat mounting bracket 2061 and the upper housing 203 can be increased, and the seat mounting bracket 2061 can be stably installed on the upper housing 203.

In some embodiments of the present disclosure, as shown in Figs. 13 and 9, the upper housing 203 is provided with a high-voltage output plug-in 207 configured to be connected to an output pole of the battery module 100, and with a low-voltage output plug-in 202 configured to connect and communicate with a BMS main board 50 of the battery pack 1000. In this way, the battery pack 1000 can output high-voltage power through the high-voltage output plug-in 207, and the BMS main board 50 can also communicate with the outside through the low-voltage output plug-in 202.

Further, as shown in Fig. 12, the high-voltage output plug-in 207 and/or the low-voltage output plug-in 202 are arranged under the rear seat 301 of the vehicle. Preferably, the high-voltage output plug-in 207 and the low-voltage output plug-in 202 are both provided under the rear seat 301 of the vehicle. By providing an electrical component 302 between the rear seat 301 of the vehicle and the battery pack 1000, the repair of the electrical component 302 can be facilitated. Moreover, the high-voltage output plug-in 207 and the low-voltage output plug-in 202 are both configured to be connected to the electrical component 302 of the vehicle. It should be noted that the electrical component 302 is provided outside the battery pack 1000, and may include a power distribution unit for the vehicle and a power distribution box and other structural parts of the battery pack 1000. The high-voltage output plug-in 207 can be connected to the power distribution unit, and the low-voltage output plug-in 202 can be connected to the power distribution box. By providing the power distribution box outside the battery pack 1000, an internal space of the battery pack 1000 can be saved, and this can increase the energy density of the battery pack 1000.

In some embodiments of the present disclosure, as shown in Figs. 13 and 12, a circumferential edge of the upper housing 203 is provided with an upper connecting edge 2031, and a circumferential edge of the lower housing 201 is provided with a lower connecting edge 2011. The upper and lower connecting edges 2031, 2011 constitute the connecting edge of the above embodiments, and are connected in a sealed manner. In this way, it is possible to improve the sealing performance of the installation cavity 205 and prevent dust and other debris from entering the installation cavity 205.

Further, as shown in Figs. 13 and 12, the upper connecting edge 2031 is provided with an upper connecting hole 2032, and the lower connecting edge 2011 is provided with a lower connecting hole 2012 corresponding to the upper connecting hole 2032. A fastener (such as a bolt) passes through the upper connecting hole 2032 and the lower connecting hole 2012 simultaneously and is used to be connected to the vehicle body mounting structure 300. The fastener can pass through the lower connecting edge 2011 and the upper connecting hole 2032 in sequence before being connected to the vehicle body mounting structure 300. This arrangement makes it possible to firmly install the battery pack 1000 on the vehicle body mounting structure 300 and prevent the battery pack 1000 from falling off.

In some embodiments of the present disclosure, the housing 200 may be provided with a repair hole provided corresponding to the BMS main board 50, and with a repair cover configured to open or close the repair hole, making it easy to repair the BMS main board 50.

In some embodiments of the present disclosure, as shown in Fig. 12, the upper housing 203 is provided with a gasket 2033 provided corresponding to the upper connecting hole 2032 and configured for position limitation.

In some embodiments of the present disclosure, the battery module 100 is bonded to the lower housing 201 and/or the upper housing 203. Preferably, the battery module 100 may be bonded to the lower housing 201 and the upper housing 203 via structural adhesive 15, thereby fixing the battery module 100 inside the housing 200.

The battery module 100 according to the embodiment of the present disclosure includes a columnar battery cell 20, a second heat exchange structure 404 and a second battery cell supporting structure 400. The battery cell 20 is sandwiched in the second heat exchange structure 404, and the second heat exchange structure 404 can come into contact with the battery cell 20, and is configured for heat exchange with the battery cell 20.

As shown in Fig. 13, the battery module 100 may be provided with a second battery cell supporting structure 400, and includes at least one battery cell 20, and may be installed in the housing 200 of the battery pack 1000.

As shown in Figs. 13-17 and 18, the second battery cell supporting structure 400 includes a second supporting body 401 and a second bottom supporting rib 402. The second supporting body 401 is configured to support the battery cell 20. Further, the battery cell 20 is provided on an upper surface of the second supporting body 401, and the second bottom supporting rib 402 is connected to the second supporting body 401 and is located on a side of the second supporting body 401 far away from the battery cell 20. For example, the battery cell 20 is provided on the upper surface of the second supporting body 401, and the second bottom supporting rib 402 is provided on a lower surface of the second supporting body 401.

The battery module 100 may be provided with the second battery cell supporting structure 400. In this case, the second battery cell supporting structure 400 belongs to the structure of the battery module 100, but the present invention is not limited to this. The second battery cell supporting structure 400 may be provided as a separate part. Preferably, the second battery cell supporting structure 400 belongs to the structure of the battery module 100. When the second battery cell supporting structure 400 supports the battery cell 20, the second battery cell supporting structure 400 plays a buffering role. The battery module 100 is installed inside the housing 200 of the battery pack 1000, and the second battery cell supporting structure 400 is supported below the battery cell 20. Further, the second battery cell supporting structure 400 is supported between the battery cell 20 and the housing 200 (the lower housing 200). When the bottom of the housing 200 of the battery pack 1000 is subjected to an impact, since the second bottom supporting rib 402 deforms and absorbs energy, the second battery cell supporting structure 400 can absorb the impact force, which can reduce the impact force received by the battery cell 20, thereby making it possible to improve the safety of using the battery module 100 and the battery pack 1000, and also extend the service life of the battery module 100 and the battery pack 1000. Moreover, when the impact force is transmitted to the second bottom supporting rib 402, it can transmit the impact force to different areas of the battery module 100, which can prevent the single battery cell 20 from being subjected to an excessive force, thereby making the battery cells 20 in the battery module 100 uniformly stressed.

Therefore, through providing the second bottom supporting rib 402, the second battery cell supporting structure 400 is installed inside the housing 200 of the battery pack 1000 to support the battery cells 20. When the bottom of the housing 200 of the battery pack 1000 is subjected to an impact, the second battery cell supporting structure 400 plays a buffering role. The second battery cell supporting structure 400 can absorb the impact force, and the impact force received by the battery cell 20 can be reduced, making it possible to improve the safety of using the battery module 100 and the battery pack 1000, and also extend the service life of the battery module 100 and the battery pack 1000. Moreover, the second bottom supporting rib 402 can transmit the impact force to the entire battery module 100, which can prevent the single battery cell 20 from being subjected to an excessive force, thereby making the battery cells 20 in the battery module 100 uniformly stressed.

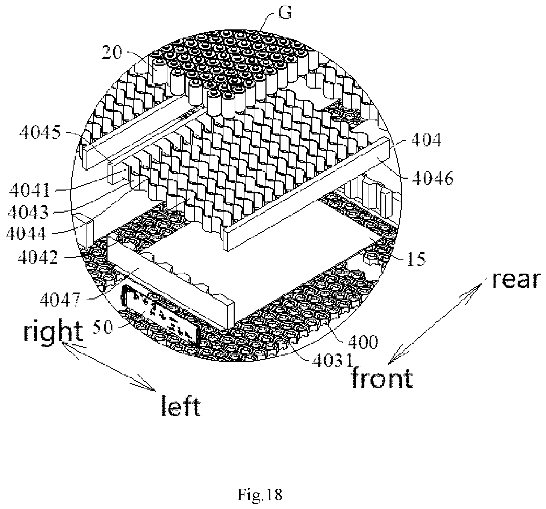

In some embodiments of the present disclosure, as shown in Figs. 13 and 18, an end of the battery cell 20 opposite to the second battery cell supporting structure 400 is bonded to the second supporting body 401, and further, the battery cell 20 is bonded to the second supporting body 401 via structural adhesive 15. This arrangement makes it possible to stably assemble the battery cell 20 and the second battery cell supporting structure 400 together, and can prevent the position of the battery cell 20 relative to the second battery cell supporting structure 400 from moving.

In some embodiments of the present disclosure, as shown in Fig. 18, the second heat exchange structure 404 may include a plurality of heat exchange plates 4041. The heat exchange plate 4041 may define a refrigerant flow passage therein, in which the refrigerant may flow. The plurality of heat exchange plates 4041 are sequentially spaced apart in a length direction of the battery module 100, and between two adjacent ones of the heat exchange plates 4041, a sandwiching space 4042 can be formed, in which the battery cell 20 is sandwiched. The length direction of the battery module 100 refers to a front-rear direction in Fig. 18. By installing the battery cell 20 in the sandwiching space 4042, the battery cell 20 can exchange heat with the heat exchange plates 4041 on both sides, which can increase an area of contact between the heat exchange plates 4041 and the battery cell 20, making it possible to better dissipate heat from the battery cell 20 and thus keep the battery cell 20 at a suitable operating temperature.

In some embodiments of the present disclosure, as shown in Fig. 18, each heat exchange plate 4041 may include a first arc-shaped portion 4043 and a second arc-shaped portion 4044, which are connected and both of which extend in a length direction of the heat exchange plate 4041, which refers to the left-right direction in Fig. 18. In the length direction of the battery module 100, a direction in which the first arc-shaped portion 4043 is recessed is opposite to a direction in which the second arc-shaped portion 4044 is recessed. Further, as shown in Fig. 18, the first arc-shaped portion 4043 is recessed towards the front of the heat exchange plate 4041, and the second arc-shaped portion 4044 is recessed toward the rear of the heat exchange plate 4041. Moreover, the first arc-shaped portion 4043 and the second arc-shaped portion 4044 of one of two adjacent ones of the heat exchange plates 4041 are arranged corresponding to the first arc-shaped portion 4043 and the second arc-shaped portion 4044 of the other heat exchange plate 4041, respectively. One battery cell 20 may be provided between the two first arc-shaped portions 4043 of the two adjacent heat exchange plates 4041, and one battery cell 20 may be provided between the two second arc-shaped portions 4044 of the two adjacent heat exchange plates 4041. In this way, it is possible to configure the heat exchange plate 4041 as a serpentine structure. After a battery cell 20 is installed between two adjacent heat exchange plates 4041, the heat exchange plate 4041 can limit the position of the battery cell 20, so that the position of the battery cell 20 can be more stable.

In some embodiments of the present disclosure, as shown in Fig. 18, the second heat exchange structure 404 may further include a first side plate 4045 and a second side plate 4046, and two ends of the heat exchange plate 4041 are connected to and in communication with the first side plate 4045 and the second side plate 4046, respectively. The first side plate 4045 and the second side plate 4046 can each define a refrigerant flow passage therein, so that the two ends of the heat exchange plate 4041 are in communication with the first side plate 4045 and the second side plate 4046, respectively.

Further, one of the first side plate 4045 and the second side plate 4046 may be provided with a refrigerant inlet, and the other of the first side plate 4045 and the second side plate 4046 may be provided with a refrigerant outlet, so that the refrigerant can circulate inside the second heat exchange structure 404.

In some embodiments of the present disclosure, as shown in Fig. 18, the battery module 100 may further include end plates 4047, and two ends of the first side plate 4045 and two ends of the second side plate 4046 are connected to the end plates 4047; and/or the end plates 4047 are connected to the second battery cell supporting structure 400. Further, as shown in Fig. 18, front ends of the first side plate 4045 and the second side plate 4046 are connected to the same end plate 4047, and rear ends of the first side plate 4045 and the second side plate 4046 are connected to the same end plate 4047, and the end plates 4047 are connected to the second battery cell supporting structure 400. In this way, it is possible to firmly assemble the structure of the battery module 100 and improve the structural stability of the battery module 100.

In some embodiments of the present disclosure, as shown in Fig. 18, the battery module 100 may further include a BMS (BATTERY MANAGEMENT SYSTEM) main board 50, which is connected to the low-voltage output plug-in 202 of the battery pack 1000 through a wire harness. The BMS main board 50 is arranged on the end plate 4047 or on the first side plate 4045 or on the second side plate 4046. Preferably, the BMS main board 50 is provided on the end plate 4047, and it may be bonded and mounted on the end plate 4047, or be mounted on the end plate 4047 through a bolt, or be connected to the end plate 4047 in a snap fit manner. By providing the BMS main board 50 on the end plate 4047, the BMS main board 50 can be integrated on the battery module 100. As a result, the battery module 100 and the BMS main board 50 have a compact overall structure. After the battery module 100 is installed in the housing 200, a situation in which the BMS main board 50 occupies space in another position of the battery pack 1000 can be avoided, and the space utilization rate in the battery pack 1000 can thus be improved.

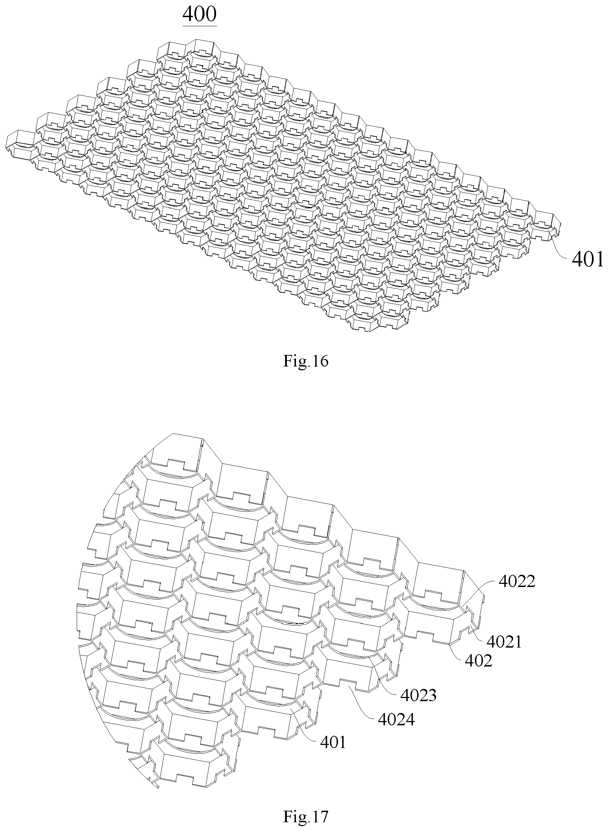

In some embodiments of the present disclosure, as shown in Figs. 16 and 17, the second bottom supporting rib 402 and the second supporting body 401 jointly define a buffer space 4021 that is arranged corresponding to the battery cell 20 in a thickness direction of the second supporting body 401, which refers to an up-down direction in Fig. 13. When the force is transmitted to the second bottom supporting rib 402, the buffer space 4021 can avoid the second bottom supporting rib 402, and the second bottom supporting rib 402 can deform and absorb energy, thereby making it possible to ensure the energy absorption effect of the second bottom supporting rib 402. In turn, the force received by the battery cell 20 can be reduced.

In some embodiments of the present disclosure, as shown in Figs. 13, 16, and 17, there are multiple buffer spaces 4021 and multiple battery cells 20. In the thickness direction of the second supporting body 401, the multiple buffer spaces 4021 and the multiple battery cells 20 are arranged in one-to-one correspondence, wherein the battery cell 20 may be a columnar battery cell 20. Preferably, the battery cell 20 is a cylindrical battery cell 20, and one battery cell 20 is provided to correspond to one buffer space 4021. In this way, it is possible to increase an area for arranging the second bottom supporting rib 402. When the second bottom supporting rib 402 is stressed, it can transmit the force to the entire battery module 100, so as to make the force on the battery module 100 more uniform.

In some embodiments of the present disclosure, as shown in Figs. 16 and 17, the second bottom supporting rib 402 includes at least one supporting rib unit 4022, and each of the supporting rib units 4022 and the second supporting body 401 jointly define one of the buffer spaces 4021. In this way, it is possible to achieve the purpose of defining the buffer space 4021 and ensure the operating performance of the second bottom supporting rib 402.

Further, as shown in Fig. 17, the second bottom supporting rib 402 includes a plurality of the supporting rib units 4022, two adjacent ones of which are connected. Further, any two adjacent ones of the supporting rib units 4022 are connected. Further, in a radial direction of the second battery cell supporting structure 400, the supporting rib unit 4022 has a polygonal section, such as a hexagonal section, and two adjacent supporting rib units 4022 have an overlapping area. In this way, it is possible to connect the two adjacent supporting rib units 4022 together, and when the force is transmitted to the second bottom supporting rib 402, it is possible to ensure the transmission of force between the plurality of supporting rib units 4022, so that the force can be transmitted to the entire battery module 100, which can further prevent the single battery cell 20 from being subjected to an excessive force, thereby making the battery cells 20 in the battery module 100 uniformly stressed.

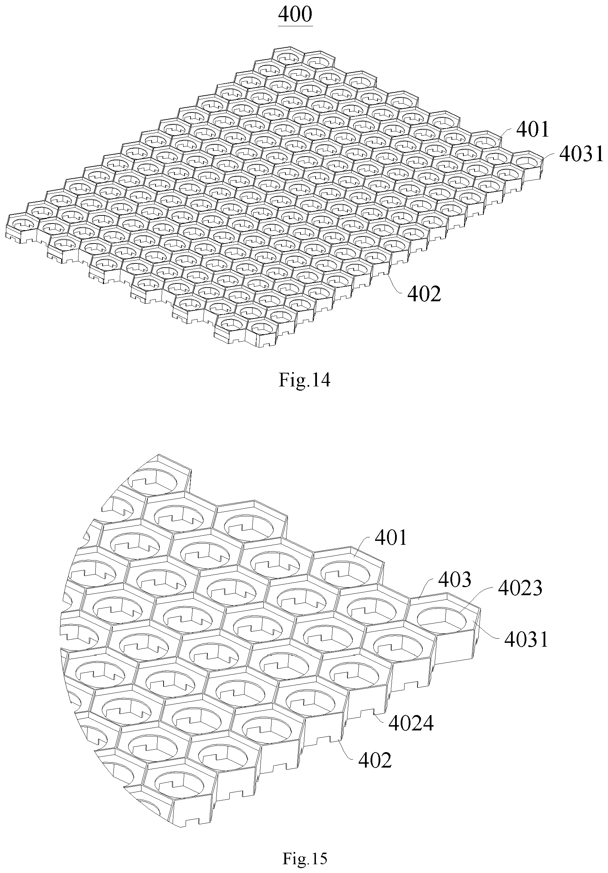

In some embodiments of the present disclosure, as shown in Figs. 15 and 17, the second supporting body 401 is provided with an avoidance hole 4023 penetrating the second supporting body 401 and provided corresponding to the buffer space 4021. The avoidance hole 4023 is in communication with the buffer space 4021, and the battery cell 20 is provided with an explosion-proof valve, which is arranged corresponding to the avoidance hole 4023. When the second battery cell supporting structure 400 supports the battery cell 20, the explosion-proof valve of the battery cell 20 is arranged corresponding to the avoidance hole 4023, and when the gas in the battery cell 20 is discharged, the gas flows into the buffer space 4021 through the avoidance hole 4023 to achieve exhaust.

Further, the supporting rib unit 4022 is provided with an exhaust gap 4024 communicating with the buffer space 4021. The exhaust gap 4024 is an exhaust channel, and may be provided at an end of the supporting rib unit 4022 far from the second supporting body 401. After the gas in the battery cell 20 flows into the buffer space 4021 through the avoidance hole 4023, the gas in the buffer space 4021 can be discharged through the exhaust gap 4024.

In some embodiments of the present disclosure, as shown in Figs. 14 and 15, the second battery cell supporting structure 400 may further include a second upper supporting rib 403 provided on a surface of the second supporting body 401 close to the battery cell 20. The second upper supporting rib 403 and the second supporting body 401 jointly define an installation space 4031 for installing the battery cell 20, and the second upper supporting rib 403 is adapted to be sandwiched between two adjacent ones of the battery cells 20 of the battery module 100. The second upper supporting rib 403 extends in the same direction as the battery cell 20. Further, the second upper supporting rib 403 and the second supporting body 401 jointly define a plurality of installation spaces 4031. In the radial direction of the second battery cell supporting structure 400, the installation space 4031 has a polygonal section, such as a hexagonal section. In the thickness direction of the second supporting body 401, one installation space 4031 is provided facing one buffer space 4021. When the battery cell 20 is installed in the installation space 4031, a second upper supporting rib 403 can be sandwiched between two adjacent battery cells 20. In this way, it is possible to allow the second battery cell supporting structure 400 to limit the position of the battery cell 20. Therefore, the battery cell 20 can be firmly installed in the second battery cell supporting structure 400, so that the position of the battery core 20 can be prevented from moving.

Further, the second upper supporting rib 403 is provided around the avoidance hole 4023, wherein the second upper supporting rib 403 is arranged outside the avoidance hole 4023 in the radial direction of the second battery cell supporting structure 400. In this case, when the battery cell 20 is installed in the installation space 4031, the explosion-proof valve of the battery cell 20 can be easily provided to correspond to the avoidance hole 4023.

As shown in Fig. 13, the battery cell 20 can be bonded to the second battery cell supporting structure 400 via structural adhesive 15.

Further, the plurality of battery cells 20 of the battery module 100 are connected in series via a bus bar.

In some embodiments of the present disclosure, as shown in Fig. 13, the lower housing 201 is provided with a lower housing cross beam 2013, which is used to improve the modality and rigidity of the battery pack 1000. Further, the lower housing cross beam 2013 can be connected with a bottom wall and side walls of the lower housing 201, so that the structural strength of the lower housing 201 can be improved.

It should be noted that the housing 200 of the battery pack 1000 of the first embodiment has the same structure as the housing 200 of the battery pack 1000 of the second embodiment.

The vehicle according to the embodiment of the present disclosure includes the vehicle body floor assembly of the above-mentioned embodiment. By configuring the housing 200 as the vehicle body floor, the housing 200 can replace the vehicle body floor. As compared with the prior art, the vehicle does not need to have a separate vehicle body floor, which can improve the integration of the battery pack 1000 and the vehicle body, is conducive to the utilization of the height space of the vehicle, and can also reduce the weight of the vehicle.

In the description of this specification, the description with reference to the terms "one embodiment", "some embodiments", "exemplary embodiments", "examples", "specific examples", "some examples" or the like means that specific features, structures, materials, or characteristics described with reference to the embodiments or examples are included in at least one embodiment or example of the present disclosure. In this specification, the schematic representations of the above-mentioned terms do not necessarily refer to the same embodiment or example. Moreover, the described specific features, structures, materials or characteristics can be combined in any one or more embodiments or examples in an appropriate way.

Although the embodiments of the present disclosure have been shown and described, those of ordinary skill in the art can understand that various changes, modifications, substitutions and variations can be made to these embodiments without departing from the principle and purpose of the present invention, and that the scope of the present invention is defined by the claims and equivalents thereof.

## Claims

1. A vehicle body floor assembly for a vehicle, comprising:
a vehicle body mounting structure;
a battery pack, comprising a battery module and a housing in which the battery module is provided, wherein the housing is connected to the vehicle body mounting structure, and at least part of the housing is configured as a vehicle body floor for the vehicle.

2. The vehicle body floor assembly according to claim 1, wherein the housing is provided with a vehicle body mounting portion, which is connected to the vehicle body mounting structure.

3. The vehicle body floor assembly according to claim 2, wherein the vehicle body mounting structure comprises a left sill beam, a right sill beam, and a cross beam connected between the left sill beam and the right sill beam, the vehicle body mounting portion being connected to the cross beam.

4. The vehicle body floor assembly according to claim 3, wherein the housing comprises an upper housing and a lower housing jointly defining an installation cavity for installing the battery module, wherein the upper housing is provided with the vehicle body mounting portion and is configured as the vehicle body floor.

5. The vehicle body floor assembly according to claim 3, wherein a circumferential edge of the housing is provided with a connecting edge, which is connected to the left sill beam and/or the right sill beam;
the vehicle body mounting structure further comprises an end beam connected between the left and right sill beams, and the connecting edge is connected to the end beam.

6. The vehicle body floor assembly according to any one of claims 1 to 5, wherein the housing is provided with seat installation portions for installing seats of the vehicle.

7. The vehicle body floor assembly according to any one of claims 1 to 6, wherein the housing is provided a high-voltage output plug-in configured to be connected to an output pole of the battery module, and with a low-voltage output plug-in configured to connect and communicate with a BMS main board of the battery pack;
the high-voltage output plug-in and/or the low-voltage output plug-in are provided under a rear seat of the vehicle, and the high-voltage output plug-in and the low-voltage output plug-in are both configured to be connected to electrical components of the vehicle.

8. The vehicle body floor assembly according to any one of claims 1 to 7, wherein the battery module is bonded to the housing.

9. The vehicle body floor assembly according to any one of claims 1 to 8, wherein the battery pack further comprises a first heat exchange structure provided in the housing and located outside the battery module, and configured to exchange heat with the battery module.

10. The vehicle body floor assembly according to any one of claims 1 to 9, wherein the battery module comprises
a battery cell unit;
a side frame provided around the battery cell unit;
a first battery cell supporting structure, supported between the battery cell and the housing, and comprising a first supporting body and a first bottom supporting rib, wherein the first supporting body is configured to support the battery cell unit and is provided with an avoidance groove penetrating the first supporting body, and the first bottom supporting rib is connected to the first supporting body and is located on a side of the first supporting body far from the battery cell unit, and the first bottom supporting rib corresponds to the avoidance groove in a thickness direction of the first supporting body.

11. The vehicle body floor assembly according to claim 10, wherein the battery module further comprises a BMS main board provided on the side frame.

12. The vehicle body floor assembly according to any one of claims 1 to 11, wherein the battery module comprises
a columnar battery cell;
a second heat exchange structure, wherein the battery cell is sandwiched in the second heat exchange structure, and the second heat exchange structure is configured to exchange heat with the battery cell;
a second battery cell supporting structure, supported between the battery cell and the housing and comprising a second supporting body and a second bottom supporting rib, wherein the second supporting body is configured to support the battery cell, and the second bottom supporting rib is connected to the second supporting body and is located on a side of the second supporting body far from the battery cell.

13. The vehicle body floor assembly according to claim 12, wherein the second heat exchange structure comprises multiple heat exchange plates, which are sequentially spaced apart in a length direction of the battery module to form a sandwiching space between two adjacent ones of the heat exchange plates, in which the battery cell is sandwiched;
each of the heat exchange plates comprises first and second arc-shaped portions, which are connected and both of which extend in a length direction of the heat exchange plate, and in the length direction of the battery module, a direction in which the first arc-shaped portion is recessed is opposite to a direction in which the second arc-shaped portion is recessed, and the first and second arc-shaped portions of one of two adjacent ones of the heat exchange plates are arranged corresponding to the first and second arc-shaped portions of the other heat exchange plate, respectively.

14. The vehicle body floor assembly according to claim 13, wherein the second heat exchange structure further comprises first and second side plates, and two ends of the heat exchange plate are connected to and in communication with the first and second side plates, respectively;
the battery module further comprises end plates, and two ends of the first side plate and two ends of the second side plate are connected with the end plates; and/or the end plates are connected to the second battery cell supporting structure;
the battery module further comprises a BMS main board provided on the end plate, or on the first side plate, or on the second side plate.

15. The vehicle body floor assembly according to claim 12, wherein the second bottom supporting rib and the second supporting body jointly define a buffer space, which corresponds to the battery cell in a thickness direction of the second supporting body;
the second bottom supporting rib comprises at least one supporting rib unit, and each of the supporting rib units and the second supporting body jointly define one of the buffer spaces;
the second bottom supporting rib comprises a plurality of the supporting rib units, two adjacent ones of which are connected;
the second supporting body is provided with an avoidance hole penetrating the second supporting body, wherein the avoidance hole is provided corresponding to the buffer space, and an explosion-proof valve for the battery cell is provided corresponding to the avoidance hole;
the supporting rib unit is provided with an exhaust gap communicating with the buffer space;
the second battery cell supporting structure further comprises a second upper supporting rib provided on a surface of the second supporting body close to the battery cell, the second upper supporting rib and the second supporting body jointly define an installation space for installing the battery cell, and the second upper supporting rib is adapted to be sandwiched between two adjacent ones of the battery cells.

16. A vehicle, comprising the vehicle body floor assembly for the vehicle according to any one of claims 1 to 15.
